# EUROPÄISCHE PATENTSCHRIFT

(11) **EP 0 932 440 B1**
(45) Veröffentlichungstag und Bekanntmachung des Hinweises auf die Patenterteilung: **09.04.2003**
(21) Anmeldenummer: 98942461.9
(22) Anmeldetag: 25.06.1998
(51) Int. Cl.: B01D 53/94, B01D 53/86, F01N 3/20

(54) **VERFAHREN UND VORRICHTUNG ZUR SELEKTIVEN KATALYTISCHEN NOx-REDUKTION**
METHOD AND DEVICE FOR SELECTIVE CATALYTIC NOx REDUCTION
DISPOSITIF ET PROCEDE DE REDUCTION CATALYTIQUE SELECTIVE DU NOx

(30) Priorität: 03.07.1997 DE 19728343
(43) Veröffentlichungstag der Anmeldung: 04.08.1999
(73) Patentinhaber: ROBERT BOSCH GMBH, 70442 Stuttgart (DE)
(72) Erfinder: MARKO, Armin, D-70197 Stuttgart (DE); WAHL, Thomas, D-75172 Pforzheim (DE); ALKEMADE, Ulrich, D-71229 Leonberg (DE); BRENNER, Frank, D-71686 Remseck (DE); BAREIS, Marc, D-71706 Markgroeningen (DE); HARNDORF, Horst, D-71701 Schwieberdingen (DE)
(86) Internationale Anmeldenummer: DE9801731
(87) Internationale Veröffentlichungsnummer: WO99001205

(56) Entgegenhaltungen:
- EP-A- 0 848 985
- WO-A-94/11685
- DE-A- 4 200 514
- DE-A- 4 221 451
- DE-U- 29 708 591
- PATENT ABSTRACTS OF JAPAN vol. 015, no. 007 (C-0794), 9. Januar 1991 & JP 02 258017 A (BABCOCK HITACHI KK), 18. Oktober 1990

## Beschreibung

### Stand der Technik

Die Erfindung betrifft ein Verfahren und eine Vorrichtung zur selektiven katalytischen NOx-Reduktion in sauerstoffhaltigen Abgasen unter Verwendung von Ammoniak und einem Reduktionskatalysator.

Ammoniak ist bekannt als selektives und effizientes Reduktionsmittel für die katalytische Reduktion (SCR) von Stickoxiden in sauerstoffhaltigen Abgasen von zum Beispiel Verbrennungsmotoren.

Insbesondere aus Gründen der Toxizität sowie der Sicherheitsprobleme, die durch die Lagerung gasförmigen Ammoniaks entstehen, wurden Verfahren entwickelt, wonach Ammoniak erst am Ort seiner Verwendung als Reduktionsmittel durch Hydrolyse von Harnstoff erzeugt wird.

Die EP - B1 - 0 487 886 beschreibt ein Verfahren zur quantitativen Hydrolyse von Harnstoff durch Versprühen einer wäßrigen Harnstofflösung auf einen Verdampfer und Weiterleitung über einen Hydrolysekatalysator, wobei die Oberflächen von Verdampfer und Hydrolysekatalysator mit Aktivkomponenten beschichtet sind, die die quantitative Hydrolyse von Harnstoff in Ammoniak und C02 katalysieren und die Bildung fester Reaktionsprodukte des Harnstoffs inhibieren.

Das obengenannte Verfahren hat den Nachteil, daß eine Flüssigkeit zur Bereitstellung des Reduktionsmittels zudosiert werden muß, die weniger präzise dosiert werden kann als ein gasförmiges Medium. Daher enthält der Gasstrom, der den Reduktionskatalysator verläßt, in der Regel noch unverbrauchten Ammoniak, der nicht ohne weiteres in die Atmosphäre entlassen werden kann, sondern der an einem Oxidationskatalysator in nichttoxische Bestandteile zerlegt werden muß.

Das Verfahren ist mit hohem apparativen Aufwand verbunden, bedingt durch den Hydrolysekatalysator sowie das Mitführen und das über den Strömungsquerschnitt gleichmäßige Einbringen von Harnstofflösung.

Der Hydrolysekatalysator hat den weiteren Nachteil, daß er bei niedrigen Temperaturen Ammoniak einlagert. Erhöht sich die Abgastemperatur schnell, so wird ein Großteil des eingelagerten Ammoniaks desorbiert, ohne daß er als Reduktionsmittel für die selektive katalytische Reduktion genutzt werden kann.

Die Verwendung einer wäßrigen Harnstofflösung bringt weitere Probleme mit sich - im Winterbetrieb von Kraftfahrzeugen sowie auch durch die Absenkung der Abgastemperatur durch die Verdampfung von Wasser im Abgas:
die nach dem Stand der Technik verwendete ca. 30 bis 35 %-ige wässrige Harnstofflösung hat einen Gefrierpunkt von -11°C. Bei tieferen Temperaturen, beispielsweise bis zum Gefrierpunkt von Diesel-Kraftstoff, ist ein Betrieb des Kraftfahrzeuges nicht sichergestellt. Zwar ist eine Gefrierpunktsemiedrigung durch Additive möglich, doch sind derartige Additive, beispielsweise Ammoniumformiat, in der Regel besonders korrosiv, so dass durch ihren Einsatz neue Probleme entstehen.

Durch die Notwendigkeit der Verdampfung von Wasser im Abgas wird letzteres um etwa 20 Grad Kelvin abgekühlt. Die unbefriedigende Tieftemperaturaktivität von SCR-Katalysatoren wirkt sich dadurch besonders stark aus.

In JP-A-2.258.017 wird eine Vorrichtung und ein Verfahren zur katalytischen NOₓ Reduktion in Abgasen unter Verwendung von eines Reduktionskatalysators und von Ammoniak beschrieben, wobei das Ammoniak durch elektrische Aufheizung eines in einem Behälter eingebrachten festen Speichermediums freigesetzt wird. Das Speichermedium ist Harnstoff.

In DE 42 00 514 A1 wird ein Verfahren zur katalytischen Entstickung von Abgasen beschrieben, bei dem ein Reduktionsmittel eingesetzt wird, das außerhalb eines Abgaskanals durch thermische Spaltung eines festen Speichermediums erzeugt wird. Dabei werden die flüchtigen Spaltprodukte in den Abgasstrom vor dem Katalysator eingeleitet. Insbesondere ist dort vorgesehen, aus einem Reservoir Harnstoff in wässriger oder organischer Lösung zu entnehmen, und durch das heiße Abgas thermisch in flüchtige Bestandteile zu zersetzen.

Aus DE 42 21 451 A1 ist schließlich ein Verfahren zur katalysierten Entstickung von Abgasen bekannt, wobei die Abgase nach dem Verlassen des Motors mit einer wässrigen Lösung von beispielsweise Ammoniak oder Harnstoff als Reduktionsmittel vermischt und über einen Katalysator geführt werden. Das Reduktionsmittel zerfällt bei den dort herrschenden erhöhten Temperaturen unter Bildung von Ammoniakmolekülen, das entsprechend dem NH₃-Speichervermögen des Katalysators in diesem abgelagert wird.

Daneben ist dort eine Vorrichtung zur Durchführung der katalysierten Entstickung der Abgase von Dieselmotoren und Mager-Ottomotoren beschrieben, die eine Mischkammer, einen Entstickungskatalysator und einen nachgeschalteten Oxidationskatalysator aufweist, wobei die Mischkammer ein Temperaturmessgerät aufweist und über eine Leitung mit einer Dosiervorrichtung verbunden ist. Das in der Abgasleitung geführte Abgas gelangt zunächst in die Mischkammer, dem dort beispielsweise eine NH₃-haltige wässrige . Lösung mit der Dosiervorrichtung zugeführt wird, wobei die Menge der zugeführten Lösung entsprechend dem Motorkennfeld in Abhängigkeit von der Temperatur geregelt wird.

### Vorteile der Erfindung

Das erfindungsgemäße Verfahren mit den Merkmalen des Hauptanspruchs hat demgegenüber den Vorteil, dass ein gasförmiges Reduktionsmittel zur Verfügung gestellt wird, das präzise dosierbar ist, keine Probleme im Winterbetrieb verursacht und somit keine zusätzlichen Gefrierschutzmaßnahmen erfordert und bei dessen Verwendung die Problematik der geringen Tieftemperaturaktivität von SCR-Katalysatoren etwas entschärft wird.

Zudem ist die Vorrichtung zur Durchführung des erfindungsgemäßen Verfahrens apparativ einfach, weil der Harnstoff-Hydrolyse-Katalysator entfällt und zusätzlich raumsparend durch die um etwa den Faktor 3 höhere Speicherdichte für Ammoniak der erfindungsgemäß eingesetzten festen Speichermedien gegenüber der Speicherdichte wäßriger Harnstofflösung. Der freiwerdende Bauraum kann gegebenenfalls für einen zusätzlichen SCR-Monolithen genutzt werden.

Die Anforderungen an das Dosiersystem sind geringer, da Verstopfungsprobleme bei den Dosierkomponenten, im Gegensatz zur Harnstoff- Wasser-Lösung, nicht auftreten können.

Die Notwendigkeit von Druckluftunterstützung für die Einbringung des Reduktionsmittels entfällt, da bei der Ammoniakfreisetzung immer ein ausreichendes Druckgefälle zum Abgassystem aufgebaut wird. Das System ist somit für Pkw- wie auch Nkw-Anwendung gleichermaßen geeignet.

Gegenüber Verfahren mit gasförmigem Ammoniak sind Sicherheitsprobleme entschärft, da der mitgeführte Ammoniak weitgehend an die Speichersubstanz gebunden, das heißt nicht frei verfügbar ist.

Besonders vorteilhaft ist weiterhin, daß die erfindungsgemäß eingesetzten festen Speichermedien regenerierbar sind, das heißt, daß der entleerte Speicher wieder mit Ammoniak befüllt werden kann. Die Zahl der Regenerierzyklen kann bis zu 1000 betragen.

Durch die in den Unteransprüchen angegebenen Maßnahmen sind vorteilhafte Weiterbildungen und Verbesserungen des im Hauptanspruch angegebenen Verfahrens möglich.

In vorteilhafter Weise kann als festes Speichermedium Strontiumchlorid, SrC12, eingesetzt werden, das eine hohe Speicherdichte für Ammoniak besitzt, vergleichbar der Speicherdichte von festem Harnstoff. Strontiumchlorid kann ganz oder teilweise durch Calciumchlorid ersetzt werden, das vergleichbare Vorteile bietet.

Besonders vorteilhaft ist es weiterhin, zur Aufheizung des festen Speichermediums die Abwärme des Motorkühlmittels und/oder des Abgases zu verwenden.

Die Vorrichtung nach der Erfindung kann vorteilhaft mit einem Pufferbehälter für gasförmigen Ammoniak ausgestattet werden, um auch im instationären Motorbetrieb und/oder in Startphasen, wenn nicht genügend Energie für die Beheizung des Ammoniakspeichers zur Verfügung steht, gasförmigen Ammoniak vorrätig zu haben, unabhängig von der Aufheizphase des Behälters 1.

### Zeichnung

Die Erfindung wird im folgenden anhand der Zeichnungen erläutert, die drei Ausführungsbeispiele für Vorrichtungen zur Durchführung des erfindungsgemäßen Verfahrens an einem Kraftfahrzeug wiedergeben.

Es zeigen im einzelnen:
Fig. 1 eine schematische Darstellung einer erfindungsgemäßen Vorrichtung,
Fig. 2 eine besonders angepaßte Ausführungsform und
Fig. 3 eine weitere besonders angepaßte Ausführungsform einer erfindungsgemäßen Vorrichtung.

### Beschreibung der Ausführungsbeispiele

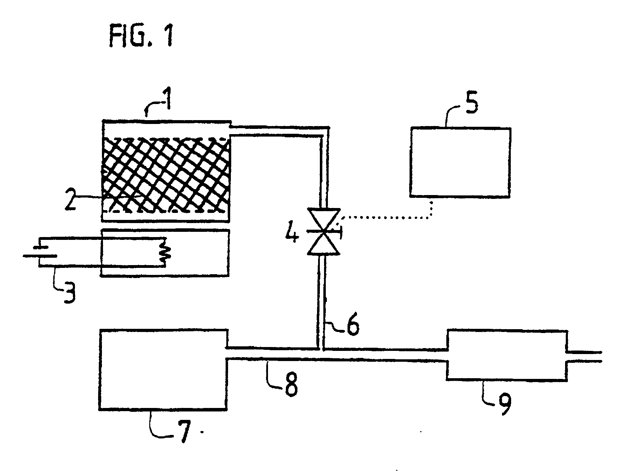

Die Vorrichtung in Figur 1 weist einen Behälter 1 auf, der mittels einer Heizvorrichtung 3 beheizbar ist und die Ammoniak - speichernde Substanz 2 beinhaltet,

Das Volumen des Behälters 1 ist so ausgelegt, daß ausreichend Ammoniak zur Verfügung steht, um die NOx - Entfernung aus dem Abgas eines Verbrennungsmotors mit Hilfe des Katalysatorsystems innerhalb eines Wartungsintervalls des Fahrzeugs durchzuführen. Es hat sich gezeigt, daß ein Volumen von ca. 10 Liter besonders geeignet ist.

Als feste Speichermedien kommen Substanzen in Frage, die bei Umgebungsbedingungen (ca.20 °C) Ammoniak derart speichern, daß der Ammoniak - Dampfdruck über dem Speichermedium in einem abgeschlossenen System gering ist (<0,5 bar).

Die festen Speichermedien nach der Erfindung können Substanzen enthalten, die Ammoniak durch physikalische und/oder chemische Adsorption binden, wie beispielsweise Aktivkohle, Zeolithe usw.

Als feste Speichermedien kommen weiterhin Substanzen in Betracht, die Ammoniak in Form eines chemischen Komplexes binden. Hierzu kommen vorwiegend Salze, insbesondere Chloride und/oder Sulfate eines oder mehrerer Erdalkalimetalle und /oder eines oder mehrerer 3d-Nebengruppenelemente, vorzugsweise Mangan, Eisen, Kobalt, Nickel, Kupfer und/oder Zink, in Frage.

In vorteilhafter Weise wird ein festes Speichermedium eingesetzt, das Strontiumchlorid, SrC12, enthält. Strontiumchlorid speichert bis zu acht Moleküle Ammoniak je Strontium - Ion unter Bildung von [(Sr(NH3)8]C12. Bei einer angenäherten Dichte von 1,5 g/cm3 ergibt sich eine eingespeicherte Menge von 48 Mol NH3 je Liter Speichermedium. Im Vergleich hierzu stellt Harnstoff bei einer Dichte von 1,32 g/cm3 eine Menge von 44 Mol Ammoniak je Liter festen Harnstoff zur Verfügung. Strontiumchlorid kann ganz oder teilweise durch Calciumchlorid ersetzt werden.

Eine nennenswerte Ammoniakfreisetzung beginnt im Falle des [(Sr(NH3)8]C12 ab etwa 30 °C. Dabei entsteht ein Ammoniak- Dampfdruck von etwa 0,8 bar. Bei 80 °C stellt sich ein Ammoniak- Dampfdruck von etwa 8 bar ein.
Die Vorrichtung soll so betrieben werden, daß der Druck im Behälter 1 vorzugsweise zwischen 2 und 10 bar beträgt.

Als Heizvorrichtung 3 kommt eine elektrische Heizung und/oder eine Heizvorrichtung in Betracht, die die Abwärme des Motorkühlmittels und/oder des Abgases nutzt.

Der durch Aufheizen des festen Speichermediums enstandene gasförmige Ammoniak wird über ein elektrisch oder pneumatisch betätigtes Ventil 4, gesteuert von einem Steuergerät 5, über die Zuführleitung für Ammoniak 6 in den Abgasstrang 8 zwischen Motor 7 und Katalysator 9 zudosiert.

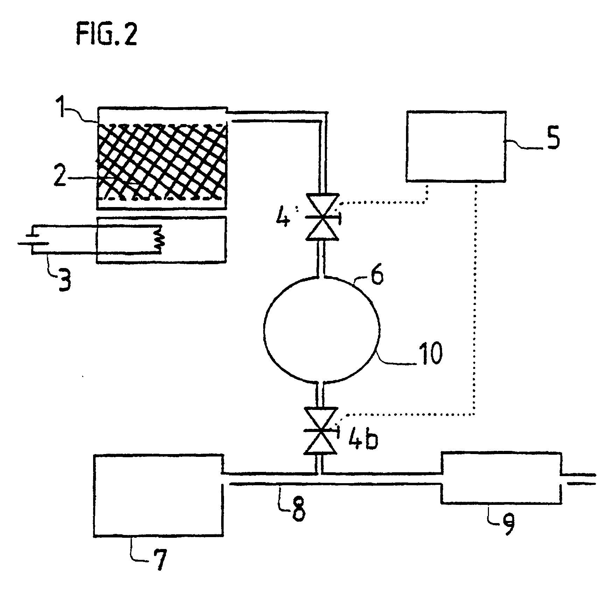

Gemäß einem bevorzugten Ausführungsbeipiel (Figur 2) wird zwischen Ventil 4 und Abgasstrang 8 ein Pufferbehälter 10 zwischengeschaltet. Der Pufferbehälter 10 ist über ein vom Steuergerät 5 steuerbares Ventil 4b mit dem Abgasstrang 8 verbunden. Beim Abstellen des Fahrzeugs schließen die Ventile 4 und 4b, so daß der Pufferbehälter 10 mit gasförmigem Ammoniak gefüllt ist und unter Druck steht. Mit der Vorrichtung nach Figur 2 ist es somit möglich, auch direkt nach dem Start des Motors gasförmigen Ammoniak unabhängig von der Aufheizphase des Behälters 1 vorrätig zu haben.

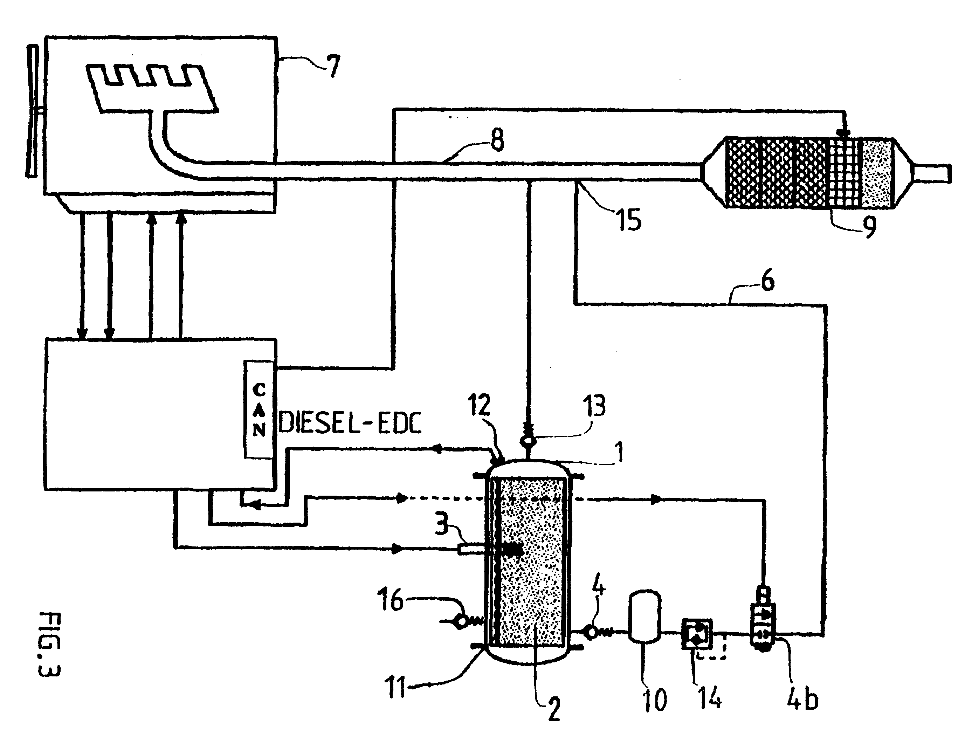

Eine Vorrichtung mit zusätzlichen vorteilhaften Einrichtungen ist in Figur 3 dargestellt:
Zum Befüllen des Behälters 1 ist ein Befüllstutzen mit integriertem Rückschlagventil 16 vorgesehen, das ein Entweichen des eingebrachten Ammoniaks durch die Einfüllöffnung verhindert.
Eine feinporige, siebähnliche Konstruktion 11 verhindert die Austragung der im Behälter 1 befindlichen, granulatartigen Speichersubstanz 2.
Zur Regelung und aus Sicherheitsgründen ist am Behälter 1 ein Drucksensor 12 angebracht, der bei Erreichen eines vorgegebenen, maximalen Druckniveaus die Wärmezufuhr unterbricht. Weiterhin ist ein Sicherheitsventil 13 (Öffnungsdruck ca, 10 bis 15 bar) vorgesehen, das bei einem zu hohen Druckanstieg im Speicherbehälter anspricht und den freiwerdenden Ammoniak zum Beispiel in den Abgasstrang ableitet.
Nach dem Pufferbehälter 10 ist ein Druckbegrenzer 14 vorgesehen, der den notwendigenn Ammoniakpartialdruck von 2 bis 3 bar sicherstellt.
An geeigneter Stelle stromauf vor dem Katalysator 9 ist eine Ammoniakdosierstelle 15, beispielsweise ein Dosierrohr mit Blende vorgesehen, so daß eine gute Durchmischung des Ammoniaks mit dem Abgasstrom gewährleistet werden kann.
Die Abläufe überwacht und regelt ein elektronisches Steuergerät (Diesel EDC), in das zusätzliche Funktionen implementiert sind, die die Ammoniakmenge an den aktuellen Motor-Betriebszustand anpassen.-

## Patentansprüche

1. Verfahren zur selektiven katalytischen NOₓ-Reduktion in sauerstoffhaltigen Abgasen eines Verbrennungsmotors (7) unter Verwendung von Ammoniak und einem Reduktionskatalysator (9), wobei gasförmiger Ammoniak durch Aufheizung eines in einen Behälter (1) eingebrachten festen Speichermediums (2) zur Verfügung gestellt wird, **dadurch gekennzeichnet, dass** ein regenerierbares festes Speichermedium (2) eingesetzt wird, so dass der entleerte Behälter (1) mit dem festen Speichermedium (2) wieder mit Ammoniak befüllt werden kann.

2. Verfahren nach Anspruch 1, **dadurch gekennzeichnet, dass** das Speichermedium (2) Ammoniak durch Adsorption bindet.

3. Verfahren nach Anspruch 1, **dadurch gekennzeichnet, dass** das Speichermedium (2) Ammoniak in Form eines chemischen Komplexes bindet.

4. Verfahren nach Anspruch 3, **dadurch gekennzeichnet, dass** das Speichermedium (2) ein oder mehrere Salze, insbesondere Chloride und/oder Sulfate eines oder mehrerer Erdalkalimetalle und/oder eines oder mehrerer 3d-Nebengruppenelemente, vorzugsweise Mangan, Eisen, Kobalt, Nickel, Kupfer und/oder Zink, enthält.

5. Verfahren nach Anspruch 4, **dadurch gekennzeichnet, dass** das Speichermedium (2) Strontiumchlorid und/oder Calciumchlorid enthält.

6. Verfahren nach einem der vorangehenden Ansprüche, **dadurch gekennzeichnet, dass** das Speichermedium (2) durch eine elektrische Heizung und/oder die Abwärme des Motorkühlmittels und/oder des Abgases aufgeheizt wird.

7. Verfahren nach Anspruch 6, **dadurch gekennzeichnet, dass** das Speichermedium (2) auf 50°C bis 200°C, vorzugsweise 80°C bis 150°C, oder auf einen Ammoniak-Dampfdruck von 0,1 bar bis 30 bar, vorzugsweise 2 bar bis 10 bar, aufgeheizt wird.

8. Verfahren nach Anspruch 1, **dadurch gekennzeichnet, dass** das Ammoniak dem Abgas zudosiert und die zudosierte Ammoniakmenge über ein Steuergerät (5) an den aktuellen Betriebzustand eines Verbrennungsmotors (7) angepasst wird.

9. Vorrichtung zur Durchführung des Verfahrens nach einem der vorangehenden Ansprüche, mit einem Reduktionskatalysator (9) und einer Zuführleitung (6) für Ammoniak in einen Abgasstrang (8) zwischen einem Verbrennungsmotors (7) und dem Reduktionskatalysator (9), wobei die Zuführleitung (6) über ein Ventil (4) mit einem Behälter (1) verbunden ist, der mit einem festen Speichermedium (2) gefüllt und mittels einer Heizeinrichtung (3) aufheizbar ist, und wobei das feste Speichermedium (2) ein regenerierbares festes Speichermedium (2) ist, derart dass der entleerte Behälter (1) mit dem festen Speichermedium (2) wieder mit Ammoniak befiillbar ist.

10. Vorrichtung nach Anspruch 9, **dadurch gekennzeichnet, dass** aus dem Behälter (1) durch Aufheizen des festen Speichermediums (2) gasförmiger Ammoniak entnehmbar und über die mit einer Ammoniakdosierstelle (15) und einem Ventil (4) versehene Zuführleitung (6) dem Abgasstrang (8) zuführbar ist, und dass ein Steuergerät (5) vorgesehen ist, mit dem über die Ammoniakdosierstelle (15) und dem Ventil (4) die dem Abgasstrang (8) über die Zuführleitung (6) zugeführte Menge an Ammoniak an den aktuellen Betriebszustand des Motors (7) anpassbar ist.

## Claims

1. Method for the selective catalytic reduction of NOₓ in oxygen-containing exhaust gases from an internal combustion engine using ammonia and a reduction catalytic converter (9), gaseous ammonia being provided by heating a solid storage medium (2) which has been introduced into a tank (1), **characterized in that** a solid storage medium (2) which can be regenerated is used, so that the emptied tank (1) containing the solid storage medium (2) can be refilled with ammonia.

2. Method according to Claim 1, **characterized in that** the storage medium (2) binds ammonia through adsorption.

3. Method according to Claim 1, **characterized in that** the storage medium (2) binds ammonia in the form of a chemical complex.

4. Method according to Claim 3, **characterized in that** the storage medium (2) contains one or more salts, in particular chlorides and/or sulphates, of one or more alkaline-earth metals and/or one or more elements from subgroup 3d, preferably manganese, iron, cobalt, nickel, copper and/or zinc.

5. Method according to Claim 4, **characterized in that** the storage medium (2) contains strontium chloride and/or calcium chloride.

6. Method according to one of the preceding claims, **characterized in that** the storage medium (2) is heated by an electric heater and/or by the waste heat of the engine coolant and/or of the exhaust gas.

7. Method according to Claim 6, **characterized in that** the storage medium (2) is heated to 50°C to 200°C, preferably 80°C to 150°C, or to an ammonia vapour pressure of from 0.1 bar to 30 bar, preferably 2 bar to 10 bar.

8. Method according to Claim 1, **characterized in that** the ammonia is metered to the exhaust gas, and the metered quantity of ammonia is adapted to the current operating state of an internal combustion engine (7) by means of a control unit (5).

9. Device for carrying out the method according to one of the preceding claims, having a reduction catalytic converter (9) and a line (6) for feeding ammonia into an exhaust section (8) between an internal combustion engine (7) and the reduction catalytic converter (9), the feedline (6) being connected via a valve (4) to a tank (1), which is filled with a solid storage medium (2) and can be heated by means of a heater device (3), and the solid storage medium (2) being a solid storage medium (2) which can be regenerated, in such a manner that the emptied tank (1) holding the solid storage medium (2) can be refilled with ammonia.

10. Device according to Claim 9, **characterized in that** gaseous ammonia can be removed from the tank (1) by heating the solid storage medium (2) and can be fed to the exhaust section (8) via the feedline (6), which is provided with an ammonia-metering point (15) and a valve (4), and **in that** there is a control unit (5), by means of which the amount of ammonia fed to the exhaust section (8) via the feedline (6) can be matched to the current operating state of the engine (7) via the ammonia-metering point (15) and the valve (4).

## Revendications

1. Procédé de réduction catalytique sélective d'oxyde d'azote NOx dans des gaz d'échappement contenant de l'oxygène d'un moteur à combustion interne en utilisant de l'ammoniac et un catalyseur réducteur (9), l'ammoniac à l'état gazeux étant fourni par chauffage d'un milieu de stockage (2), solide, placé dans un réservoir (1),
**caractérisé en ce qu'**
on utilise un milieu de stockage solide (2), régénérable, de façon à pouvoir remplir de nouveau le réservoir vide (1) contenant le milieu de stockage solide (2) avec de l'ammoniac.

2. Procédé selon la revendication 1,
**caractérisé en ce que**
le milieu de stockage (2) fixe l'ammoniac par adsorption.

3. Procédé selon la revendication 1,
**caractérisé en ce que**
le milieu de stockage (2) fixe l'ammoniac sous la forme d'un complexe chimique.

4. Procédé selon la revendication 3,
**caractérisé en ce que**
le milieu de stockage (2) contient un ou plusieurs sels, en particulier un chlorure et/ou un sulfate d'un ou plusieurs métaux alcalinoterreux et/ou un ou plusieurs métaux du groupe élémentaire 3d, de préférence du manganèse, du fer, du cobalt, du nickel, du cuivre et/ou du zinc.

5. Procédé selon la revendication 4,
**caractérisé en ce que**
le milieu de stockage (2) contient du chlorure de strontium et/ou du chlorure de calcium.

6. Procédé selon l'une quelconque des revendications précédentes,
**caractérisé en ce que**
le milieu de stockage (2) est chauffé par un chauffage électrique et/ou par la chaleur dégagée par l'agent de refroidissement du moteur et/ou les gaz d'échappement.

7. Procédé selon la revendication 6,
**caractérisé en ce que**
le milieu de stockage (2) est chauffé à une température comprise entre 50°C et 200°C, de préférence 80°C jusqu'à 150°C ou à une pression de vapeur d'ammoniac de 0,1 bar jusqu'à 30 bars, de préférence entre 2 bars et 10 bars.

8. Procédé selon la revendication 1,
**caractérisé en ce qu'**
on ajoute l'ammoniac au gaz d'échappement en le dosant et la quantité d'ammoniac ajoutée par dosage est adaptée par un appareil de commande (5) à l'état de fonctionnement instantané du moteur à combustion interne (7).

9. Dispositif pour la mise en oeuvre du procédé selon l'une quelconque des revendications précédentes, comportant un catalyseur réducteur (9) et une conduite d'alimentation (6) pour introduire l'ammoniac dans la conduite de gaz d'échappement (8) entre un moteur à combustion interne (7) et le catalyseur réducteur (9),
la conduite d'alimentation (6) étant reliée par une vanne (4) à un réservoir (1) chargé d'un milieu de stockage solide (2) et qui peut être chauffé par une installation de chauffage (3), et
le milieu de stockage solide (2) étant un milieu de stockage solide régénérable (2) de façon que le réservoir vidé (1) contenant le milieu de stockage solide (2) puisse de nouveau être rempli d'ammoniac.

10. Dispositif selon la revendication 9,
**caractérisé en ce que**
de l'ammoniac à l'état gazeux est prélevé du réservoir (1) par chauffage du milieu de stockage solide (2) et il est fourni par un point de dosage d'ammoniac (15) et une vanne (4) équipant une conduite d'alimentation (6) à la conduite de gaz d'échappement (8), et
un appareil de commande (5) adapte la quantité d'ammoniac fournie au point de dosage d'ammoniac (15) à la conduite de gaz d'échappement (8) par l'intermédiaire de la vanne (4) et de la conduite d'alimentation (6) selon l'état de fonctionnement instantané du moteur (7).
